# EUROPÄISCHE PATENTANMELDUNG

(11) **EP 4 289 770 A1**
(43) Veröffentlichungstag der Anmeldung: **13.12.2023**
(21) Anmeldenummer: 23168196.6
(22) Anmeldetag: 17.04.2023
(51) Int. Cl.: B65G 47/08, B65G 57/24

(54) **SYSTEM UND VERFAHREN ZUM GRUPPIEREN UND PALETTIEREN VON GEBINDEN**

(30) Priorität: 09.06.2022 DE 102022114569
(71) Anmelder: Krones Aktiengesellschaft, 93073 Neutraubling (DE)
(72) Erfinder: MEHDI, Arsalan, 93073 Neutraubling (DE)
(74) Vertreter: Benninger, Johannes

(57) **Zusammenfassung**

Es ist ein Gruppierer (1) für Gebinde offenbart. Der Gruppierer (1) umfasst mindestens eine erste Gruppierstation (3) und wenigstens eine zweite Gruppierstation (5), die sich oberhalb der mindestens einen ersten Gruppierstation (3) befindet. Es ist vorgesehen, dass die Gruppierstationen (3, 5) jeweils mehrere Gebinde in eine relative Anordnung entsprechend einer aus den jeweiligen mehreren Gebinden zu bildenden Palettenlage überführen können, indem sie Gebinde jeweils selektiv drehen und/oder schräg zu ihrer bisherigen Bewegungsrichtung versetzen.

## Beschreibung

Die vorliegende Erfindung betrifft einen Gruppierer sowie ein System zum Manipulieren und Palettieren von Gebinden mit einem solchen Gruppierer. Weiter betrifft die Erfindung ein Verfahren zum Gruppieren und Palettieren von Gebinden.

Bei der Förderung, Handhabung und anschließenden Verpackung von Artikeln, Gebinden oder Stückgütern wie bspw. Paketen oder Behältergebinden, die in einer Reihe hintereinander auf einem Horizontalförderer transportiert werden, besteht normalerweise die Notwendigkeit einer Umsortierung, um die Artikel, Stückgüter und/oder Gebinde in eine stapelfähige Anordnung, d.h. in die räumliche Anordnung einer stapelfähigen Lage zu bringen, damit sie in der Verpackungsmaschine in Palettenlagen übereinander gestapelt werden können.

Um die z.B. hintereinander in einer einzigen Reihe angeförderten Artikel oder andere Stückgüter wie Gebinde in eine stapelfähige Lagenanordnung zu bringen, müssen aufeinander folgend transportierte Gebinde oder Stückgüter jeweils unterschiedlichen Verschiebe- und/oder Drehbewegungen unterzogen werden, was bspw. mit sog. Portalgreifsystemen oder auch mit Knickarm-Greifsystemen erfolgen kann. Hierbei werden innerhalb eines Bewegungsraumes wie bspw. eines Transfertischs oder im Bereich eines breiten Gurtförderers die von einer Horizontalfördereinrichtung angeförderten Artikel, Gebinde oder Stückgüter mittels der Greifer einzeln erfasst und an eine definierte Position verschoben und/oder gedreht, ggf. unter gleichzeitigem Weitertransport in horizontaler Förderrichtung.

Je nach der zu konfigurierenden oder gruppierenden Gebindelage, Stückgut- oder Artikellage sind jeweils unterschiedliche Positionierungsbewegungen für aufeinander folgende Artikel, Stückgüter oder Gebinde durchzuführen, bis das gewünschte Lagenbild vervollständigt ist. Diese Lagenanordnung kann anschließend als Ganzes weitertransportiert und bspw. einer Palettiervorrichtung übergeben werden. Ein solches System ist beispielsweise aus der WO 2009/011634 A1 bekannt.

Unabhängig von den eingesetzten Portalgreifsystemen oder Knickarm-Greifsystemen sind für jede Erfassung eines Gebindes oder Stückgutes mehrphasige Bewegungsabläufe erforderlich: der Greifarm muss auf das Gebinde oder Stückgut abgesenkt werden, bevor die Greifzangen sich schließen und das Gebinde oder Stückgut erfassen können. Danach erfolgt eine Verschiebe- und/oder Drehbewegung in horizontaler Richtung, bevor der Greifer zum Freigeben des Stückguts oder Gebindes wieder geöffnet und nach oben gehoben wird. Aufgrund der schnell getakteten Vielzahl solcher Bewegungsabläufe hat es sich als vorteilhaft erwiesen, zwei oder mehr solcher Anordnungen und diesen jeweils zugeordneten Handhabungs- und/oder Manipulationseinrichtungen hintereinander anzuordnen, ggf. gespeist durch zwei oder mehr parallele Zuförderbänder mit darauf in Reihen beförderten Artikeln, Stückgütern oder Gebinden.

Diese zwei oder mehr als zwei solche Anordnungen können hierbei zusammenwirken, um das gewünschte Lagenbild aus jeweils mehreren Gebinden zu erzeugen. Hierzu sind diese zwei oder sogar mehr als zwei Anordnungen daher in einer Bewegungsrichtung der Gebinde hintereinander angeordnet und bilden miteinander eine Gruppierstation. Auch bei solchen bisher bekannten Anordnungen können Gebinde in lediglich drei parallelen Reihen der jeweiligen Gruppierstation zugeführt werden, welche die Gebinde sodann in eine vorgegebene Anordnung zueinander bringt, welche auf eine Palettenlage abgestimmt ist.

In der Praxis ist es häufig erwünscht, solche palettierfähigen Lagenanordnungen mit hohem Durchsatz zu erzeugen. Hierzu besteht die Möglichkeit, mehrere Gruppierstationen nebeneinander anzuordnen. Bei einer solchen Anordnung bzw. Positionierung mehrerer Gruppierstationen sind aufwände Transfermechanismen notwendig, welche eine gebildete Lagenanordnung an einen Palettierer übergeben. Auch ist ein hoher Platzbedarf erforderlich, um mehrere nebeneinander angeordnete Gruppierstation an einem Arbeitsort aufstellen zu können. Zudem sind Gruppierer und entsprechende System zum Gruppieren und Palettieren von Gebinden wünschenswert, die gegenüber bekannten Systemen eine höhere Flexibilität besitzen.

Eine Aufgabe der Erfindung ist daher, eine Entwicklung bereitzustellen, welche die genannten Nachteile zumindest in reduziertem Ausmaß aufweist.

Die obige Aufgabe wird durch die Gegenstände gelöst, welche die Merkmale in den unabhängigen Ansprüchen umfassen. Weitere vorteilhafte Ausgestaltungen werden durch die Unteransprüche beschrieben.

Die Erfindung betrifft einen Gruppierer für Gebinde. Die Gebinde können jeweils mehrere Artikel umfassen, die durch Verpackungsmaterial, wie beispielsweise flächige Verpackungszuschnitte, Umreifungen und/oder thermoplastisches Verpackungsmaterial, aneinandergehalten sind.

Der Gruppierer umfasst mindestens eine erste Gruppierstation und wenigstens eine zweite Gruppierstation. Es ist vorgesehen, dass sich die wenigstens eine zweite Gruppierstation oberhalb der mindestens einen ersten Gruppierstation befindet bzw. dass sich die wenigstens eine zweite Gruppierstation oberhalb der mindestens einen ersten Gruppierstation befindet, wenn sich der Gruppierer im Betrieb befindet. Somit kann sich die wenigstens eine zweite Gruppierstation gegenüber der mindestens einen ersten Gruppierstation in vertikaler Richtung auf einem höheren Niveau befinden, wenn sich der Gruppierer im Betrieb befindet.

Die Gruppierstationen können jeweils mehrere Gebinde in eine relative Anordnung entsprechend einer aus den jeweiligen mehreren Gebinden zu bildenden Palettenlage überführen, indem sie Gebinde selektiv drehen und/oder schräg zu ihrer bisherigen Bewegungsrichtung versetzen. Es ist daher denkbar, dass einzelne Gebinde der mehreren für die jeweilige relative Anordnung vorgesehenen Gebinde gedreht werden, ohne dass diese einzelnen Gebinde schräg zu ihrer bisherigen Bewegungsrichtung versetzt werden.

Auch ist es vorstellbar, dass einzelne Gebinde der mehreren für die jeweilige relative Anordnung vorgesehenen Gebinde schräg zu ihrer bisherigen Bewegungsrichtung versetzt werden, ohne dass diese einzelnen Gebinde gedreht werden. Auch kann es sein, dass einzelne Gebinde der mehreren für die jeweilige relative Anordnung vorgesehenen Gebinde gedreht und schräg zu ihrer bisherigen Bewegungsrichtung versetzt werden. Weiter können einzelne Gebinde der mehreren Gebinde durch die jeweilige Gruppierstation in horizontaler Richtung fortbewegt werden, ohne dass diese einzelnen Gebinde der mehreren Gebinde durch die jeweilige Gruppierstation gedreht oder schräg zu ihrer bisherigen Bewegungsrichtung versetzt werden.

Somit kann es sein, dass die Gruppierstationen jeweils einzelne der mehreren Gebinde durch Drehen und/oder Versetzen schräg zu ihrer bisherigen Bewegungsrichtung in die entsprechende relative Anordnung bringen, wohingegen weitere Gebinde der mehreren Gebinde ohne Drehen und ohne schrägen Versatz mittels der jeweiligen Gruppierstation in horizontaler Richtung fortbewegt werden, da sich diese weiteren Gebinde der mehreren Gebinde bereits in einer entsprechenden Position befinden, welche sich zum Überführen der jeweiligen mehreren Gebinde in die relative Anordnung eignet.

Bewährt haben sich Ausführungsformen, bei denen die wenigstens eine zweite Gruppierstation auf der mindestens einen ersten Gruppierstation aufsteht bzw. bei welchen die wenigstens eine zweite Gruppierstation von der mindestens einen ersten Gruppierstation getragen wird. Alternativ oder ergänzend hierzu haben sich Ausführungsformen bewährt, bei welchen sich die wenigstens eine zweite Gruppierstation derart oberhalb der mindestens einen ersten Gruppierstation befindet, dass die mindestens eine erste Gruppierstation und die wenigstens eine zweite Gruppierstation hierbei in vertikaler Richtung miteinander fluchten.

Die mindestens eine erste Gruppierstation kann eine Rahmenkonstruktion umfassen, welche eine Peripherie der mindestens einen ersten Gruppierstation festlegt. Auch die wenigstens eine zweite Gruppierstation kann eine Rahmenkonstruktion umfassen, welche eine Peripherie der wenigstens einen zweiten Gruppierstation festlegt. Die Rahmenkonstruktion der wenigstens einen zweiten Gruppierstation kann auf der Rahmenkonstruktion der mindestens einen ersten Gruppierstation aufstehen. Es kann in diversen Ausführungsformen vorgesehen sein, dass die Rahmenkonstruktion der mindestens einen ersten Gruppierstation hierbei mit der Rahmenkonstruktion der wenigstens einen zweiten Gruppierstation in Oberflächenkontakt steht. Bewährt haben sich hierbei Ausführungsformen, bei welchen die Rahmenkonstruktion der mindestens einen ersten Gruppierstation an der Rahmenkonstruktion der wenigstens einen zweiten Gruppierstation befestigt ist. Hierzu können ggf. Schraubverbindungen, Rastverbindungen und/oder weitere Verbindungen vorgesehen sein.

Auch kann es sein, dass die mindestens eine erste Gruppierstation und/oder die wenigstens eine zweite Gruppierstation einen Deltakinematik-Roboter oder mehrere Deltakinematik-Roboter umfassen, welche zum Überführen jeweils mehrerer Gebinde in eine relative Anordnung entsprechend einer aus den jeweiligen mehreren Gebinden zu bildenden Palettenlage ausgebildet sind.

Die Erfindung betrifft zudem ein System zum Manipulieren und Palettieren von Gebinden. Das System umfasst einen Gruppierer entsprechend einem Ausführungsbeispiel der vorherigen Beschreibung. Weiter umfasst das System einen bestimmten Palettierer, welcher zur Entgegenname von Gebinden in der relativen Anordnung von der mindestens einen ersten Gruppierstation und zur Entgegennahme von Gebinden in der relativen Anordnung von der wenigstens einen zweiten Gruppierstation ausgebildet ist und in der relativen Anordnung entgegengenommene Gebinde als Palettenlage auf einer zugeordneten Palette absetzen kann. Der bestimmte Palettierer kann somit sowohl der mindestens einen ersten Gruppierstation als auch der wenigstens einen zweiten Gruppierstation zugeordnet sein.

Es kann sein, dass der bestimmte Palettierer eine Transfereinheit und eine Ladeeinheit umfasst, die in vertikaler Richtung relativ zueinander bewegbar sind. Der bestimmte Palettierer kann derart konfiguriert und ausgebildet sein, dass der bestimmte Palettierer über seine Transfereinheit sowohl von der mindestens einen ersten Gruppierstation als auch von der wenigstens einen zweiten Gruppierstation jeweils Gebinde in der relativen Anordnung entgegennehmen, an seine Ladeeinheit übergeben und über seine Ladeeinheit als Palettenlage auf einer zugeordneten Palette absetzen kann.

Die Erfindung betrifft zudem ein Verfahren zum Gruppieren und Palettieren von Gebinden mit einem System entsprechend einer der vorhergehend beschriebenen Ausführungsformen. Bei dem Verfahren werden jeweils mehrere Gebinde über den Gruppierer in eine relative Anordnung entsprechend einer aus den jeweiligen mehreren Gebinden zu bildenden Palettenlage gebracht. Weiter werden die jeweiligen mehreren Gebinde in der relativen Anordnung von dem bestimmten Palettierer entgegengenommen und als Palettenlage auf einer zugeordneten Palette abgesetzt.

Auch bei dem Verfahren kann es sein, dass der bestimmte Palettierer eine Transfereinheit und eine Ladeeinheit umfasst. Hierbei kann es sein, dass die Transfereinheit von der mindestens einen ersten Gruppierstation Gebinde in der relativen Anordnung entgegennimmt und an die Ladeeinheit übergibt, welche die in der relativen Anordnung von der mindestens einen ersten Gruppierstation entgegengenommenen Gebinde als Palettenlage auf einer zugeordneten Palette absetzt. Hierbei ist vorgesehen, dass die Transfereinheit und die Ladeeinheit zur Übergabe der in der relativen Anordnung von der mindestens einen ersten Gruppierstation entgegengenommenen Gebinde in vertikaler Richtung relativ zueinander bewegt werden.

Zudem ist vorgesehen, dass die Transfereinheit nach Übergabe der von der mindestens einen ersten Gruppierstation in der relativen Anordnung entgegengenommenen Gebinde in Richtung der wenigstens einen zweiten Gruppierstation bewegt wird und Gebinde in der relativen Anordnung von der wenigstens einen zweiten Gruppierstation entgegennimmt und an die Ladeeinheit übergibt, welche die in der relativen Anordnung von der wenigstens einen zweiten Gruppierstation entgegengenommenen Gebinde als Palettenlage auf einer zugeordneten Palette absetzt.

Um die Transfereinheit in Richtung der wenigstens einen zweiten Gruppierstation zu bewegen, kann die Transfereinheit entlang einer Hubwerksäule, an welcher die Transfereinheit angeordnet ist, in vertikaler Richtung angehoben werden. Es kann sein, dass die Transfereinheit mindestens einen Schieber umfasst, der eine Zustellbewegung ausführt und hierbei die in der relativen Anordnung entgegengenommenen Gebinde zentriert, bevor die Transfereinheit die in der relativen Anordnung entgegengenommenen Gebinde an die Ladeeinheit übergibt.

Es kann hierbei sein, dass die Transfereinheit und die Ladeeinheit zur Übergabe der in der relativen Anordnung von der wenigstens einen zweiten Gruppierstation entgegengenommenen Gebinde in vertikaler Richtung relativ zueinander bewegt werden.

Weiter kann es sein, dass über die mindestens eine erste Gruppierstation jeweils mehrere erste Gebinde in eine relative Anordnung entsprechend einer aus den jeweiligen mehreren ersten Gebinden zu bildenden Palettenlage überführt werden. Zudem kann es sein, dass über die wenigstens eine zweite Gruppierstation jeweils mehrerer zweite Gebinde in eine relative Anordnung entsprechend einer aus den jeweiligen mehreren zweiten Gebinden zu bildenden Palettenlage überführt werden, wobei sich die ersten Gebinde von den zweiten Gebinden im Hinblick auf eine Anzahl und/oder Art an Artikeln, die Bestandteil des jeweiligen Gebindes sind, voneinander unterscheiden.

Zudem kann es hierbei sein, dass der bestimmte Palettierer sowohl mehrere erste Gebinde in der relativen Anordnung von der mindestens einen ersten Gruppierstation entgegennimmt und als Palettenlage auf einer zugeordnete Palette absetzt sowie auch mehrere zweite Gebinde in der relativen Anordnung von der wenigstens einen zweiten Gruppierstation entgegennimmt und als weitere Palettenlage auf derselben Palette absetzt. Hierdurch können auf einfache und unkomplizierte Art und Weise Mischpaletten hergestellt werden.

Beispielsweise kann es sein, dass sich die ersten Gebinde von den zweiten Gebinden im Hinblick auf ihre Art voneinander unterscheiden, wobei es sich bei den ersten Gebinden um solche Gebinde handelt, deren Artikel jeweils durch Getränkedosen gebildet sind und bei den zweiten Gebinden um solche Gebinde handelt, deren Artikel jeweils durch Getränkeflaschen gebildet sind. Auch kann es sein, dass sich die ersten Gebinde von den zweiten Gebinden im Hinblick auf ihre Art voneinander unterscheiden, wobei es sich bei den ersten Gebinden um solche Gebinde handelt, deren Artikel durch Getränkebehälter mit einem ersten Getränk ausgebildet sind und bei den zweiten Gebinden um solche Gebinde handelt, deren Artikel durch Getränkebehälter mit einem zweiten Getränk ausgebildet sind, das sich von dem ersten Getränk unterscheidet.

Denkbar ist auch, dass dem Gruppierer Gebinde in mehr als drei parallelen Reihen zugeführt werden, wobei einzelne der mehr als drei parallelen Reihen der mindestens einen ersten Gruppierstation zugeordnet sind und die verbleibenden Reihen der mehr als drei parallelen Reihen der wenigstens einen zweiten Gruppierstation zugeordnet sind.

Auch kann es sein, dass der bestimmte Palettierer im Falle einer Störung der mindestens einen ersten Gruppierstation oder der wenigstens einen zweiten Gruppierstation eine Entgegennahme von Gebinden von dieser Gruppierstation mindestens bis zur Behebung der Störung vorzugsweise automatisch aussetzt und unter fortlaufendem Weiterbetrieb Gebinde in der relativen Anordnung von der störungsfrei betriebenen mindestens einen ersten Gruppierstation bzw. wenigstens einen zweiten Gruppierstation entgegennimmt und als Palettenlage auf einer zugeordneten Palette absetzt.

Der bestimmte Palettierer und der Gruppierer können daher über eine Steuer- und/oder Regeleinrichtung miteinander in Wirkverbindung stehen, um im Falle einer Störung der mindestens einen ersten Gruppierstation oder der wenigstens einen zweiten Gruppierstation eine Entgegennahme von Gebinden von dieser Gruppierstation mindestens bis zur Behebung der Störung automatisch auszusetzen und unter fortlaufendem Weiterbetrieb Gebinde in der relativen Anordnung von der störungsfrei betriebenen mindestens einen ersten Gruppierstation bzw. wenigstens einen zweiten Gruppierstation entgegenzunehmen und als Palettenlage auf einer zugeordneten Palette abzusetzen.

Weiter kann es sein, dass über den bestimmten Palettierer mehrmals jeweils mehrere Gebinde in der relativen Anordnung von der mindestens einen ersten Gruppierstation entgegennehmen und als mehrere untere Palettenlagen, die unmittelbar aufeinander stehen, auf einer zugeordneten Palette abgesetzt werden.

Nach Absetzen der mehreren unteren Palettenlagen kann es sein, dass über den bestimmten Palettierer ausschließlich von der wenigstens einen zweiten Gruppierstation mehrmals jeweils mehrere Gebinde in der relativen Anordnung entgegengenommen werden und als mehrere obere Palettenlagen auf den mehreren bereits auf der Palette befindlichen mehreren unteren Palettenlagen abgesetzt werden.

Alternativ hierzu kann es sein, dass nach Absetzen der mehreren unteren Palettenlagen über den bestimmten Palettierer abwechselnd von der wenigstens einen zweiten Gruppierstation und der mindestens einen ersten Gruppierstation jeweils mehrere Gebinde in der relativen Anordnung entgegengenommen werden und als mehrere obere Palettenlagen auf den mehreren bereits auf der Palette befindlichen mehreren unteren Palettenlagen abgesetzt werden.

Denkbar ist zudem, dass der bestimmte Palettierer sowie der Gruppierer über einen gewissen Zeitraum in einem ersten Betriebsmodus betrieben werden, bei welchem der bestimmte Palettierer die jeweiligen mehreren Gebinde in der relativen Anordnung ausschließlich von der mindestens einen ersten Gruppierstation entgegennimmt und als Palettenlage auf einer zugeordneten Palette absetzt. Weiter können der bestimmte Palettierer und der Gruppierer hierauf in einem zweiten Betriebsmodus betrieben werden, bei welchem der bestimmte Palettierer die jeweiligen mehreren Gebinde in der relativen Anordnung ausschließlich von der wenigstens einen zweiten Gruppierstation entgegennimmt und als Palettenlage auf einer zugeordneten Palette absetzt.

Solche Ausführungsformen besitzen eine hohe Flexibilität, da die mindestens eine erste Gruppierstation und die wenigstens eine zweite Gruppierstation auf unterschiedliche zu manipulierende Gebinde angepasst sein können. Durch den unkomplizierten beschriebenen Wechsel zwischen den unterschiedlichen Betriebsmodi kann der Gruppierer einfach auf unterschiedliche zu manipulierende Gebinde angepasst werden, ohne dass aufwändige Umrüstarbeiten an dem Gruppierer vorgenommen werden müssen. Ein Stillstand des Gruppierers über eine gewisse Zeit wird hierdurch ebenso vermieden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

An dieser Stelle sei ergänzend betont, dass Merkmale, welche vorhergehend zur Ausführungsform des erfindungsgemäßen Gruppierers bzw. zu den Ausführungsformen des erfindungsgemäßen Systems genannt wurden, gleichermaßen Teilaspekte des erfindungsgemäßen Verfahrens betreffen oder sein können. Wenn daher an einer Stelle bei der Beschreibung oder auch bei den Anspruchsdefinitionen von einem der erfindungsgemäßen Gruppierer bzw. einer Ausführungsform des erfindungsgemäßen Systems die Rede ist, so gilt dies gleichermaßen für die Ausführungsformen des erfindungsgemäßen Verfahrens, ohne erneut erwähnt zu werden. In umgekehrter Weise gilt dasselbe, so dass auch alle Aspekte und Ausführungsvarianten, die im Zusammenhang mit Ausführungsformen des erfindungsgemäßen Verfahrens erläutert wurden, gleichermaßen Teilaspekte des erfindungsgemäßen Gruppierers sowie des erfindungsgemäßen Systems betreffen oder sein können.
Fig. 1 zeigt eine schematische Ansicht einer Ausführungsform eines erfindungsgemäßen Gruppierers sowie eines erfindungsgemäßen Systems zum Manipulieren und Palettieren von Gebinden.
Fig. 2 zeigt im Flussdiagramm einzelne Schritte, wie sie einzeln oder in der gemäß Fig. 2 dargestellten Kombination in diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

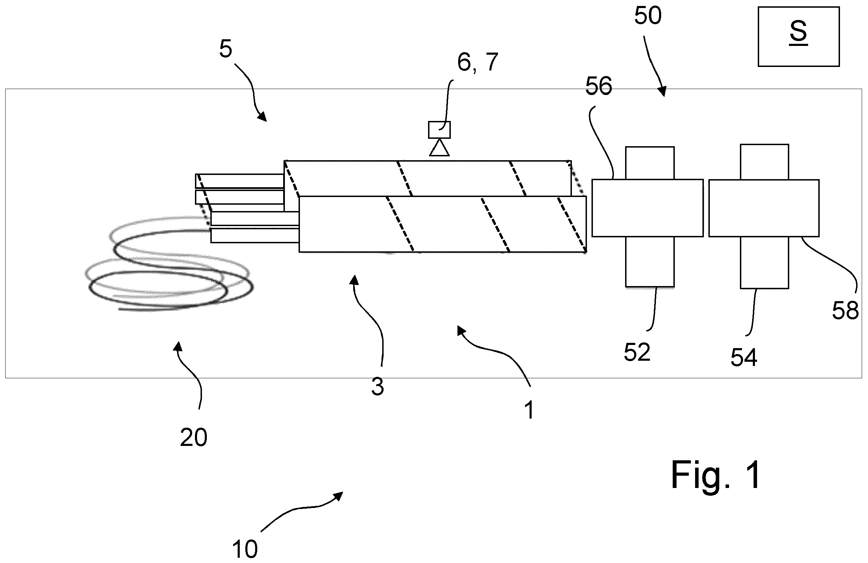

Die Fig. 1 zeigt eine schematische Ansicht einer Ausführungsform eines erfindungsgemäßen Gruppierers 1 sowie eines erfindungsgemäßen Systems 10 zum Manipulieren und Palettieren von Gebinden.

Um mehrere übereinandergestapelte Lagen an Gebinden auf einer Palette absetzen zu können, müssen die Gebinde zunächst in eine relative Ausrichtung zueinander gebracht werden, welche ihrer Orientierung bzw. Ausrichtung als Lage auf der jeweiligen Palette entspricht. Solche Lagen sind bevorzugt derart zu bilden, dass zwischen benachbarten Gebinden nach Möglichkeit keine Lücken oder Lücken mit lediglich geringem Ausmaß bestehen, um eine große Anzahl an Gebinden auf der jeweiligen Palette anordnen zu können. Einer Steuer- und/oder Regeleinrichtung S ist die jeweilige relative Anordnung von Gebinden einer jeweiligen Palettenlage bekannt. Entsprechende Informationen hierzu sind somit auf der Steuer- und/oder Regeleinrichtung S hinterlegt.

Sämtliche Gebinde, welche auf einer Palette in gestapelter Anordnung abgesetzt werden sollen, werden bei dem System 10 zunächst in parallelen Reihen über eine Zuführeinrichtung 20 bewegt und dem Gruppierer 1 zugeführt. Die Zuführeinrichtung 20 kann Transportbänder oder weitere Fördereinrichtungen besitzen, um dem Gruppierer 1 die Gebinde in mehreren parallelen Reihen zuzuführen. Der Gruppierer 5, welcher mit der Steuer- und/oder Regeleinrichtung S in Verbindung steht, ist dazu ausgebildet, jeweils mehrere Gebinde in eine relative Anordnung entsprechend einer aus den jeweiligen mehreren Gebinden zu bildenden Palettenlage zu überführen.

Der Gruppierer 1 steht mit der vorherig bereits erwähnten Steuer- und/oder Regeleinrichtung S in Verbindung, die Informationen zu einer relativen Anordnung entsprechend einer aus den jeweiligen mehreren Gebinden zu bildenden Palettenlage besitzt. Wie es Fig. 1 erkennen lässt, ist der Gruppierer 1 aus einer ersten Gruppierstation 3 und einer zweiten Gruppierstation 5 gebildet. Die zweite Gruppierstation 5 befindet sich hierbei oberhalb der ersten Gruppierstation 3 bzw. ist in vertikaler Richtung über der ersten Gruppierstation 5 angeordnet. Somit kann der Gruppierer 1 auch in kleinen Räumen aufgestellt werden, da der Gruppierer 1 sehr kompakt ausgebildet ist und wenig Platzbedarf erfordert. Die erste Gruppierstation 3 und die zweite Gruppierstation 5 können als Module ausgebildet sein und eine Rahmenkonstruktion besitzen. Die Rahmenkonstruktion der zweiten Gruppierstation 5 kann auf die Rahmenkonstruktion der ersten Gruppierstation 3 aufgesetzt sein, so dass die zweite Gruppierstation 5 von der ersten Gruppierstation 5 getragen wird.

Sowohl die erste Gruppierstation 3 als auch die zweite Gruppierstation 5 können jeweils Gebinde in eine relative Anordnung überführen, die der relativen Anordnung in der Palettenlage entspricht. Bestandteil beider Gruppierstationen 3 bzw. 5 ist ein jeweiliger Manipulator, unter dessen Zuhilfenahme die erwähnte relative Anordnung der Gebinde hergestellt wird. Auch umfasst jede Gruppierstation 3 bzw. 5 eine Horizontalfördereinrichtung, welche die jeweiligen Gebinde bewegt, während der jeweilige Manipulator die Gebinde in die beschriebene relative Anordnung zueinander überführt.

Die Gebinde können somit über die jeweilige Gruppierstation 3 bzw. 5 unterbrechungsfrei in horizontaler Richtung fortbewegt werden, wenn der jeweilige Manipulator der jeweiligen Gruppierstation 3 bzw. 5 die jeweiligen mehreren Gebinde in die relative Anordnung überführt. Ein solcher Manipulator kann beispielsweise als Deltakinematik-Roboter, als Portalroboter oder als Knickarmroboter ausgebildet sein.

Die Bezugsziffer 50 bezeichnet in der Fig. 1 einen bestimmter Palettierer. Dieser bestimmte Palettierer 50 kann Gebinde in der relativen Anordnung sowohl von der ersten Gruppierstation 3 als auch von der zweiten Gruppierstation 5 entgegennehmen und anschließend als Palettenlage auf einer in Fig. 1 nicht mit dargestellten Palette absetzen. Hierzu umfasst der bestimmte Palettierer 50 eine Transfereinheit 56, die an einer ersten Hubwerksäule 52 angeordnet ist und entlang der ersten Hubwerksäule 52 in vertikaler Richtung angehoben sowie in vertikaler Richtung abgesenkt werden kann. Durch das Anheben und Absenken in vertikaler Richtung kann die Transfereinheit 56 somit zwischen der ersten Gruppierstation 3 und der zweiten Gruppierstation 5 hin und her wechseln. Zudem umfasst der bestimmte Palettierer 50 eine Ladeeinheit 58, die an einer zweiten Hubwerksäule 54 angeordnet ist und entlang der zweiten Hubwerksäule 54 in vertikaler Richtung angehoben und in vertikaler Richtung abgesenkt werden kann.

Über die Transfereinheit 56 werden Gebinde in der relativen Anordnung vom Gruppierer 1 entgegengenommen. Die Transfereinheit 56 übergibt sodann die in der relativen Anordnung entgegengenommenen Gebinde an die Ladeeinheit 58, welche die übergebenen Gebinde auf einer Palette absetzen kann. Sofern Gebinde in der relativen Anordnung über den bestimmten Palettierer 50 entgegengenommen und zur Palette verbracht werden sollen, werden die Transfereinheit 56 und die Ladeeinheit 58 zumindest zeitweise relativ zueinander in vertikaler Richtung bewegt. Wie es Fig. 1 erkennen lässt, reicht die erste Hubwerksäule 52 in vertikaler Richtung sowohl an die erste Gruppierstation 3 als auch an die zweite Gruppierstation 5 heran. Somit kann der bestimmte Palettierer 50 über die Transfereinheit 56 in einem ersten Schritt zunächst Gebinde in der relativen Anordnung von der ersten Gruppierstation 3 entgegennehmen und an die Ladeeinheit 58 übergeben.

Nach einer vollständigen Übergabe sämtlicher dieser Gebinde an die Ladeeinheit 58 kann die Transfereinheit 56 in vertikaler Richtung entlang der ersten Hubwerksäule 52 zur zweiten Gruppierstation 5 bewegt werden, um von dort erneut Gebinde in der relativen Anordnung entgegenzunehmen. Während der Entgegennahme bewegt sich die Ladeeinheit 58 entlang der zweiten Hubwerksäule 54 in Richtung der Transfereinheit 56. Nachdem die Ladeeinheit 58 ein vertikales Höhenniveau der Transfereinheit 56 erreicht hat, übergibt die Transfereinheit 56 die bereits von dem Gruppierer 1 in der relativen Anordnung entgegengenommenen Gebinde an die Ladeeinheit 58, welche diese Gebinde wiederum als Lage bzw. Palettenlage auf einer zugeordneten Palette absetzt.

Durch einen solchen Gruppierer 1, welcher eine erste Gruppierstation 3 sowie eine oberhalb der ersten Gruppierstation 3 angeordnete zweite Gruppierstation 5 umfasst, ergeben sich in der Praxis zahlreiche Vorteile hinsichtlich Leistung und Flexibilität des gesamten Systems 10.

So sind im Ausführungsbeispiel nach Fig. 1 unterschiedliche Betriebsmodi auf der Steuer- und/oder Regeleinrichtung S hinterlegt, mit welchen das System 10 zum Manipulieren und Palettieren von Gebinden betrieben werden kann.

In einem ersten solchen Betriebsmodus kann der bestimmte Palettierer 50 abwechselnd Gebinde in der relativen Anordnung von der ersten Gruppierstation 3 und der zweiten Gruppierstation 5 entgegennehmen, in Richtung einer jeweiligen Palette bewegen und auf der jeweiligen Palette absetzen. Solche Ausführungsformen besitzen einen hohen Durchsatz. Während eine der beiden Gruppierstationen 3 bzw. 5 eine bereits gebildete relative Anordnung an Gebinden an den bestimmten Palettierer 50 übergibt, kann bereits die weitere Gruppierstation 3 bzw. 5 eine neue relative Anordnung an Gebinden bilden und diese in einem nachfolgenden Schritt an den bestimmten Palettierer 50 übergeben.

Zudem besitzt der Gruppierer 1 einen kompakten Aufbau, da die zweite Gruppierstation 5 oberhalb der ersten Gruppierstation 3 angeordnet ist. Auch bei geringen Platzverhältnissen wird hierdurch eine Palettierung mit hohem Durchsatz erreicht. Da der bestimmte Palettierer 50 bei einem solchen Aufbau eines Gruppierers 1 beiden Gruppierstationen 3 bzw. 5 zugeordnet werden kann, ist kein weiterer Transfermechanismus erforderlich, um eine bereits gebildete relative Anordnung an Gebinden von dem Gruppierer 1 an den bestimmten Palettierer 50 zu verbringen. Die Gebinde können in der relativen Anordnung unmittelbar von dem bestimmten Palettierer 50 sowohl von der ersten Gruppierstation 3 als auch von der zweiten Gruppierstation 5 entgegengenommen werden, ohne dass dem bestimmten Palettierer 50 und den Gruppierstationen 3 bzw. 5 eine zusätzliche Verbringungseinrichtung zwischengeordnet ist. Der bestimmte Palettierer 50 folgt daher unmittelbar auf den Gruppierer 1, ohne dass dem bestimmten Palettierer 50 und dem Gruppierer 1 eine weitere Arbeitseinrichtung zwischengeordnet ist.

Das System 10 entsprechend dem Ausführungsbeispiel nach Fig. 1 ist auch dazu in der Lage, sogenannte Mischpaletten zu erstellen. Auf einer solchen Mischpalette können sich erste Gebinde und zweite Gebinde befinden, wobei sich die ersten Gebinde von den zweiten Gebinden im Hinblick auf eine Anzahl und/oder Art an Artikeln, die Bestandteil des jeweiligen Gebindes sind, voneinander unterscheiden. Mischpaletten sind dem Fachmann bekannt und werden aus diesem Grunde in sämtlichen möglichen Variationen vorliegend nicht weiter erläutert.

Beispielsweise kann es sein, dass erste Gebinde ausschließlich Getränkedosen als Artikel umfassen und zweite Gebinde ausschließlich Getränkeflaschen als Artikel umfassen. Auch kann es sein, dass Artikel eines ersten Gebindes durch Getränkeflaschen ausgebildet sind, in denen ein erstes Getränk aufgenommen ist. Zudem kann es sein, dass Artikel eines zweiten Gebindes durch Getränkeflaschen ausgebildet sind, in denen ein zweites Getränk aufgenommen ist, das sich von dem ersten Getränk unterscheidet. Um Mischpaletten zu erstellen, kann das System 10 auf Veranlassung der Steuer- und/oder Regeleinrichtung S in einem zweiten Betriebsmodus arbeiten.

In einem zweiten Betriebsmodus werden der ersten Gruppierstation 3 über eine Zuführeinrichtung erste Gebinde bereitgestellt und der zweiten Gruppierstation 5 über eine Zuführeinrichtung zweite Gebinde, die sich von den ersten Gebinden unterscheiden. Weiter ist bei einem solchen zweiten Betriebsmodus auch vorgesehen, dass über die erste Gruppierstation 3 erste zugeführte Gebinde manipuliert werden und über die zweite Gruppierstation 5 zweite zugeführte Gebinde manipuliert werden, wobei sich die ersten Gebinde von den zweiten Gebinden, wie vorhergehend bereits erwähnt, voneinander unterscheiden.

Im zweiten Betriebsmodus holt der Palettierer 50 entsprechend der vorherigen Beschreibung zum ersten Betriebsmodus abwechselnd Gebinde in der relativen Anordnung von der ersten Gruppierstation 3 und der zweiten Gruppierstation 5 ab. Da über die erste Gruppierstation 3 und die zweite Gruppierstation 5 unterschiedliche Gebinde in ihre relative Anordnung gebracht werden, bildet der Palettierer 50 eine Mischpalette aus, wenn der Palettierer 50 die von der ersten Gruppierstation 3 und der zweiten Gruppierstation 5 in ihrer jeweiligen relativen Anordnung abgeholten Gebinde auf der zugeordneten Palette als jeweilige Palettenlage absetzt.

Die erste Gruppierstation 3 kann beispielsweise Gebinde manipulieren, die ausschließlich Getränkedosen umfassen. Die zweite Gruppierstation 5 kann beispielsweise Gebinde manipulieren, die ausschließlich Getränkeflaschen als Artikel umfassen. Da der Palettierer 50 abwechselnd Gebinde von den beiden Gruppierstationen 3 bzw. 5 abholt und dann als Palettenlage auf der jeweiligen Palette absetzt, können mittels des Systems 10 auf einfache Art und Weise Mischpaletten gebildet werden. Das System 10 besitzt entsprechend der vorherigen Beschreibung zum ersten Betriebsmodus weiterhin einen unkomplizierten und kompakten Aufbau.

Das System 10 der Ausführungsform nach Fig. 1 ist vorliegend auch dazu ausgebildet, bei Bedarf automatisch in einen dritten Betriebsmodus zu wechseln. Ein solcher automatischer Wechsel wird über die Steuer- und/oder Regeleinrichtung S veranlasst, sofern dies erforderlich sein sollte. Bestandteil des Systems 10 ist eine Sensorik 6, die vorliegend insbesondere als optische Erfassungseinrichtung oder als Kamera 7 ausgebildet sein kann. Über die Sensorik 6 bzw. über die Kamera 7 kann die Steuer- und/oder Regeleinrichtung S überprüfen, ob die Gruppierstationen 3 bzw. 5 relative Anordnungen aus Gebinden herstellen, die vorgegebene Soll-Kriterien erfüllen.

Sofern die Steuer- und/oder Regeleinrichtung S im Rahmen einer solchen Überprüfung einen Fehler feststellt bzw. sofern die Steuer- und/oder Regeleinrichtung S durch einen festgestellten Fehler in der relativen Anordnung an Gebinden auf eine Störung einer der beiden Gruppierstationen 3 bzw. 5 schließt, kann die Steuer- und/oder Regeleinrichtung S die jeweilige Gruppierstation 3 bzw. 5 temporär stillsetzen.

Die weitere Gruppierstation 3 bzw. 5, welche störungsfrei arbeitet, kann über die Steuer- und/oder Regeleinrichtung S fortbetrieben werden. In diesem dritten Betriebsmodus bzw. im Falle einer Störung einer der beiden Gruppierstationen 3 bzw. 5 wird der bestimmte Palettierer 50 von der Steuer- und/oder Regeleinrichtung S derart angesteuert, dass der bestimmte Palettierer 50 ausschließlich Gebinde in der relativen Anordnung von der jeweiligen Gruppierstation 3 bzw. 5 abholt, welche störungsfrei weiterarbeitet.

Eine zur Entgegennahme von Gebinden in der relativen Anordnung bis dahin ausgebildete Taktgeschwindigkeit des bestimmten Palettierers 50 kann über die Steuer- und/oder Regeleinrichtung S hierzu angepasst werden. Mittels des Systems 10 kann bei solchen Ausführungsformen selbst dann eine Palettierung fortgesetzt werden, wenn eine der beiden Gruppierstationen 3 bzw. 5 eine Störung aufweist.

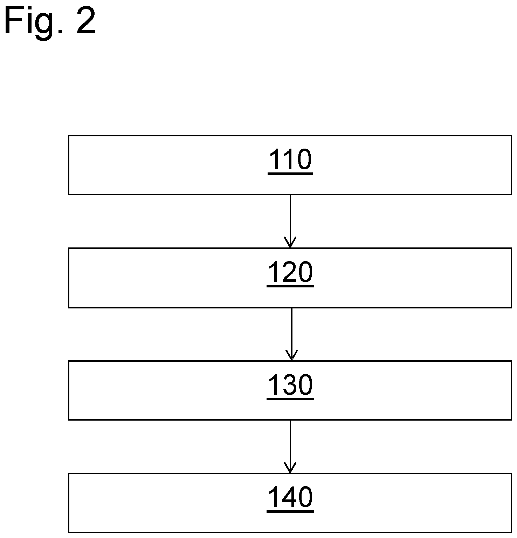

Die Fig. 2 zeigt im Flussdiagramm einzelne Schritte, wie sie einzeln oder in der gemäß Fig. 2 dargestellten Kombination in diversen Ausführungsformen des erfindungsgemäßen Verfahrens 100 vorgesehen sein können. Das Verfahren 100 entsprechend dem Ausführungsbeispiel nach Fig. 2 kann mittels des vorherig zu Fig. 1 beschriebenen Systems 10 umgesetzt bzw. durchgeführt werden.

Im ersten Schritt 110 werden einem Gruppierer 1 (vgl. Fig. 1) über eine Zuführeinrichtung 20 Gebinde bereitgestellt, welche für eine Palettierung vorgesehen sind. Der Gruppierer 1 umfasst hierbei eine erste Gruppierstation 3 und eine zweite Gruppierstation 5, welche sich oberhalb der ersten Gruppierstation 3 befindet.

Im nachfolgenden Schritt 120 werden über die erste Gruppierstation 3 Gebinde in eine relative Anordnung entsprechend einer aus den jeweiligen mehreren Gebinden zu bildenden Palettenlage gebracht und von einem bestimmten Palettierer 50 entgegengenommen bzw. einem bestimmten Palettierer 50 übergeben.

Im weiteren Schritt 130 ist vorgesehen, dass der bestimmte Palettierer 50 die von der ersten Gruppierstation 3 entgegengenommen Gebinde in Richtung einer Palette bewegt und auf der Palette als Palettenlage absetzt. Im Schritt 130 werden zeitgleich während dieser Bewegung über die zweite Gruppierstation 5, die sich oberhalb der ersten Gruppierstation 3 befindet, weitere Gebinde in eine relative Anordnung entsprechend einer aus den jeweiligen weiteren Gebinden zu bildenden Palettenlage gebracht und dem Palettierer 50 zur Entgegennahme bereitgestellt.

Im letzten Schritt 140 nimmt der Palettierer 50 schließlich die weiteren Gebinde in der relativen Anordnung von der zweiten Gruppierstation 5 entgegen, die sich oberhalb der ersten Gruppierstation 3 befindet, bewegt diese weiteren Gebinde in Richtung einer Palette und setzt diese weiteren Gebinde auf der bereits vorherig auf der Palette abgesetzten Palettenlage ab.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Gruppierer
3 erste Gruppierstation
5 zweite Gruppierstation
6 Sensorik
7 Kamera
10 System
12 Sensorik
20 Zuführeinrichtung
50 bestimmter Palettierer
52 erste Hubwerksäule
54 zweite Hubwerksäule
56 Transfereinheit
58 Ladeeinheit
100 Verfahren
110 erster Verfahrensschritt
120 zweiter Verfahrensschritt
130 dritter Verfahrensschritt
140 Vierter Verfahrensschritt
S Steuer- und/oder Regeleinrichtung

## Patentansprüche

1. Gruppierer (1) für Gebinde, umfassend mindestens eine erste Gruppierstation (3) und wenigstens eine zweite Gruppierstation (5), die sich oberhalb der mindestens einen ersten Gruppierstation (3) befindet, wobei die Gruppierstationen (3, 5) jeweils mehrere Gebinde in eine relative Anordnung entsprechend einer aus den jeweiligen mehreren Gebinden zu bildenden Palettenlage überführen können, indem sie Gebinde selektiv drehen und/oder schräg zu ihrer bisherigen Bewegungsrichtung versetzen.

2. Gruppierer nach Anspruch 1, bei welchem die wenigstens eine zweite Gruppierstation (5) auf der mindestens einen ersten Gruppierstation (3) aufsteht.

3. Gruppierer nach Anspruch 1 oder 2, bei welchem die wenigstens eine zweite Gruppierstation (5) von der mindestens einen ersten Gruppierstation (3) getragen wird.

4. Gruppierer nach einem der Ansprüche 1 bis 3, bei welchem die mindestens eine erste Gruppierstation (3) und/oder die wenigstens eine zweite Gruppierstation (5) einen Deltakinematik-Roboter oder mehrere Deltakinematik-Roboter umfassen, welche zum Überführen jeweils mehrerer Gebinde in eine relative Anordnung entsprechend einer aus den jeweiligen mehreren Gebinden zu bildenden Palettenlage ausgebildet sind.

5. System (10) zum Manipulieren und Palettieren von Gebinden, umfassend
- einen Gruppierer (1) gemäß einem der Ansprüche 1 bis 4 sowie
- einen bestimmten Palettierer (50), welcher zur Entgegennahme von Gebinden in der relativen Anordnung von der mindestens einen ersten Gruppierstation (3) und zur Entgegennahme von Gebinden in der relativen Anordnung von der wenigstens einen zweiten Gruppierstation (5) ausgebildet ist und in der relativen Anordnung entgegengenommene Gebinde als Palettenlage auf einer zugeordneten Palette absetzen kann.

6. System nach Anspruch 5, bei welchem der bestimmte Palettierer (50) eine Transfereinheit (56) und eine Ladeeinheit (58) umfasst, die in vertikaler Richtung relativ zueinander bewegbar sind und wobei der bestimmte Palettierer (50) derart konfiguriert und ausgebildet ist, dass der bestimmte Palettierer (50) über seine Transfereinheit (52) sowohl von der mindestens einen ersten Gruppierstation (3) als auch von der wenigstens einen zweiten Gruppierstation (5) jeweils Gebinde in der relativen Anordnung entgegennehmen, an seine Ladeeinheit (58) übergeben und über seine Ladeeinheit (58) als Palettenlage auf einer zugeordneten Palette absetzen kann.

7. Verfahren (100) zum Gruppieren und Palettieren von Gebinden mit einem System (10) gemäß Anspruch 5 oder Anspruch 6, bei welchem
- jeweils mehrere Gebinde über den Gruppierer (1) in eine relative Anordnung entsprechend einer aus den jeweiligen mehreren Gebinden zu bildenden Palettenlage gebracht werden und
- die jeweiligen mehreren Gebinde in der relativen Anordnung von dem bestimmten Palettierer (50) entgegengenommen und als Palettenlage auf einer zugeordneten Palette abgesetzt werden.

8. Verfahren nach Anspruch 7, bei welchem der bestimmte Palettierer (50) eine Transfereinheit (56) und eine Ladeeinheit (58) umfasst, wobei
- die Transfereinheit (52) von der mindestens einen ersten Gruppierstation (3) Gebinde in der relativen Anordnung entgegennimmt und an die Ladeeinheit (58) übergibt, welche die in der relativen Anordnung von der mindestens einen ersten Gruppierstation (3) entgegengenommenen Gebinde als Palettenlage auf einer zugeordneten Palette absetzt, wobei die Transfereinheit (56) und die Ladeeinheit (58) zur Übergabe der in der relativen Anordnung von der mindestens einen ersten Gruppierstation (3) entgegengenommenen Gebinde in vertikaler Richtung relativ zueinander bewegt werden, und wobei vorgesehen ist, dass
- die Transfereinheit (56) nach Übergabe der von der mindestens einen ersten Gruppierstation (3) in der relativen Anordnung entgegengenommenen Gebinde in Richtung der wenigstens einen zweiten Gruppierstation (5) bewegt wird und Gebinde in der relativen Anordnung von der wenigstens einen zweiten Gruppierstation (5) entgegennimmt und an die Ladeeinheit (58) übergibt, welche die in der relativen Anordnung von der wenigstens einen zweiten Gruppierstation (5) entgegengenommenen Gebinde als Palettenlage auf einer zugeordneten Palette absetzt, wobei die Transfereinheit (56) und die Ladeeinheit (58) zur Übergabe der in der relativen Anordnung von der wenigstens einen zweiten Gruppierstation (5) entgegengenommenen Gebinde in vertikaler Richtung relativ zueinander bewegt werden.

9. Verfahren nach Anspruch 7 oder Anspruch 8, bei welchem über die mindestens eine erste Gruppierstation (3) jeweils mehrere erste Gebinde in eine relative Anordnung entsprechend einer aus den jeweiligen mehreren ersten Gebinden zu bildenden Palettenlage überführt werden und bei welchem über die wenigstens eine zweite Gruppierstation (5) jeweils mehrere zweite Gebinde in eine relative Anordnung entsprechend einer aus den jeweiligen mehreren zweiten Gebinden (5) zu bildenden Palettenlage überführt werden, wobei sich die ersten Gebinde von den zweiten Gebinden im Hinblick auf eine Anzahl und/oder Art an Artikeln, die Bestandteil des jeweiligen Gebindes sind, voneinander unterscheiden und wobei
- der bestimmte Palettierer (50) sowohl mehrere erste Gebinde in der relativen Anordnung von der mindestens einen ersten Gruppierstation (3) entgegennimmt und als Palettenlage auf einer zugeordneten Palette absetzt sowie auch mehrere zweite Gebinde in der relativen Anordnung von der wenigstens einen zweiten Gruppierstation (5) entgegennimmt und als weitere Palettenlage auf derselben Palette absetzt.

10. Verfahren nach einem der Ansprüche 7 bis 9, bei welchem dem Gruppierer (1) Gebinde in mehr als drei parallelen Reihen zugeführt werden.

11. Verfahren nach einem der Ansprüche 7 bis 10, bei welchem der bestimmte Palettierer (50) im Falle einer Störung der mindestens einen ersten Gruppierstation (3) oder der wenigstens einen zweiten Gruppierstation (5) eine Entgegennahme von Gebinden von dieser Gruppierstation (3, 5) mindestens bis zur Behebung der Störung vorzugsweise automatisch aussetzt und unter fortlaufendem Weiterbetrieb Gebinde in der relativen Anordnung von der störungsfrei betriebenen mindestens einen ersten Gruppierstation (3) bzw. wenigstens einen zweiten Gruppierstation (5) entgegennimmt und als Palettenlage auf einer zugeordneten Palette absetzt.
